# EUROPEAN PATENT APPLICATION

(11) **EP 3 291 132 A1**
(43) Date of publication of application: **07.03.2018**
(21) Application number: 16186423.6
(22) Date of filing: 30.08.2016
(51) Int. Cl.: G06K 9/00, G06K 9/46

(54) **METHOD AND DRIVER ASSISTANCE SYSTEM FOR TRACKING AN OBJECT IN AN ENVIRONMENT**

(71) Applicant: Continental Automotive GmbH, 30165 Hannover (DE)
(72) Inventor: Asvatha Narayanan, Vishnu Vardhana, 560037 Kundanahalli (IN)
(74) Representative: Reuter, Andreas

(57) **Abstract**

The invention relates to a method for tracking an object in an environment. In a step (S10) of the method, a first image of an environment is provided, wherein the first image comprises information about an object within the environment. In another step (S20), a type of the object within the first image is detected using a group of predetermined filters, for example root filters and part filters. In another step (S30), a dominant filter is selected out of the group of filters and the position of the selected dominant filter within the first image is determined. In another step (S40) of the method, an orientation of the selected dominant filter is determined at the determined position within the image. In another step (S50), a second image of the environment is provided, wherein the second image comprises information about the object within the environment. In another step (S60), the determined orientation of the selected dominant filter is used for manipulating the object in the second image. The invention further relates to a driver assistance system (11) for tracking an object in an environment

## Description

### Field of the invention

The invention relates to object detection and tracking. In particular, the invention relates to a method for tracking an object in an environment and to a driver assistance system for tracking an object in an environment.

### Background of the invention

Object recognition is one of the fundamental challenges in computer vision. In particular, detecting and tracking of objects such as pedestrians is often required in practice, for example in various traffic situations. Therefore, many driver assistance systems are equipped with object detection and tracking functions. However, especially object tracking is a challenging problem as the pedestrian can vary greatly in appearance due to non-rigid deformations, change in illumination, viewpoint and intra-class shape variations. Object detection system are often based on mixtures of multi-scale deformable part models. For example, true positives are limited due to a challenging environment. In general, the accuracy of tracking processes of existing systems is relatively low.

### Summary of the invention

It is an object of the present invention to provide an improved object detection and tracking process.

This object is achieved by the subject-matter of the independent claims. Further exemplary embodiments are evident from the dependent claims and the following description.

According to an aspect of the invention a method for tracking an object in an environment is provided. In a step of the method, a first image of an environment is provided, wherein the first image comprises information about an object within the environment. In another step, a type of the object within the first image is detected using a group of predetermined filters, for example root filters and part filters. In another step, a dominant filter is selected out of the group of filters and a position of the selected dominant filter within the first image is determined. In another step of the method, an orientation of the selected dominant filter is determined at the determined position within the image. In another step, a second image of the environment is provided, wherein the second image comprises information about the object within the environment. In another step the determined orientation of the selected dominant filter is used for manipulating, e.g. warping, the object in the second image.

Using such a method improves the accuracy of the overall pedestrian detection with tracking enabled in an intuitive way. Also many objects can be tracked in this process in parallel even if they are partially occluded in the subsequent frames. In the context of the present invention this method can be considered as a combined detection and tracking method of the object in the environment. Preferably, said object is a pedestrian or at least one part of a pedestrian to be detected and tracked in the environment. Therefore, this method predominantly improves the safety in traffic situations, especially if this method is applied as part of a driver assistance function of a vehicle.

The first image of the environment may be provided by a camera, for example a camera which is part of a driver assistance system. The first image and the second image provided by the camera during the detection and tracking process may also be defined as first and second frame. In particular, the method comprises a provision of a sequence of images. However, the first image comprises information about an object in the environment in which the image has been taken. It is possible that the image comprises information about a plurality of objects such that several objects can be detected and tracked simultaneously.

A type of the object within the first image may be detected using deformable part models. Part-based models generally apply detection algorithms used on images, in which various parts of the image are used separately in order to determine if and where an object of interest exists. Deformable part models may also be used to detect the type of the object within the first image. In this manner, it is possible to determine whether a person or pedestrian as the object of interest is present in the image.

The object detection step of the method, e.g. the detection of the type of object, using deformable part models may comprise the following sub-steps:
At first, an image pyramid is constructed by resizing the images for many levels. The images in the different levels may have a different number of pixels. Therefore, the different levels of the image pyramid may have different resolutions. Afterwards, supervised trained coefficients are used to determine the group of filters, e.g. the root filters and part filters, by computing the convolution filters. Then, a deformation rule is applied by performing a distance transform. In another sub-step, the respective filters, for example root filters are combined with part filters by applying a structural rule which may be created in a supervised training process. A combined symbol is performed after applying the structural rule and a symbol score may be collected in order to determine whether the specific type of obj ect, e.g. whether a pedestrian has been detected or not. When applying the symbol score, one or more threshold values may be predefined such that the object, e.g. the pedestrian can be identified or found in different scales based on the threshold value. In other words, the symbol score may be checked against the set of threshold values to determine the type of the object, i.e. it is determined whether the recognized object is a pedestrian or not. The threshold value may be made stringent to have more true positive detection and less false positive detection.

After the object detection is completed, i.e. after the pedestrian has been identified and detected, the dominant filter is selected or filtered out from the group of filters determined in the detection step of the object. Preferably, a plurality of dominant filters is selected out of the group of filters. The selected dominant filters may comprise root filters and/or part filters. These dominant filters may have given more contribution for the detection of the object. For example, the dominant filters are selected by tracing back the scores obtained in the during object detection, e.g. during the detection of the type of object. For example, the higher the score during the object detection, the higher the probability that the corresponding filter is selected as a dominant filter. It is possible that a threshold value for the score is used in order to evaluate if the filter is to be selected as a dominant filter or not. For example, if the threshold value for the score is exceeded, the corresponding filter is selected as a dominant filter.

In this manner, the dominant filters may be selected or filtered out of the group of filters of the first image with high confidence. A position of the dominant filters in the first image may be obtained such that so called HOG (histogram of oriented gradients)- features in the positions of the dominant filters can be collected and used for tracking. In other words, HOG-features are determined at each position at which a dominant filter has been determined. Afterwards, an orientation assignment computation may be performed using the HOG-features such that an orientation of the selected dominant filters can be determined at the determined position of the selected dominant filters within the image.

The HOG-features may specify the orientation of the dominant filters, e.g. dominant part and root filters, which have been selected. This orientation can be utilized for image warping the targeted candidate or object in the next frame, e.g. in the second frame. In particular, after the second image of the environment is provided, the determined orientation of the selected dominant filters is used for manipulating, e.g. warping, the object in the second image. Afterwards the object detection in the second image is carried out using deformable part models. This means that the usage of deformable part models as described above is repeated for the second image.

According to an embodiment of the invention, the type of the object within the second image is detected using the selected dominant filter.

In particular, HOG-features for each position of the selected dominant filters are provided such that, after an orientation assignment computation, the orientation of each filter of the selected dominant filters is known. These orientations of the selected dominant filters can then be used for image warping in the second image based on which the type of object can be determined in the second image. For example, deformable part models are used again to detect the type of the object in the second image. This procedure may be the same as described with the help of sub-steps above.

According to another embodiment of the invention, a mean shift iteration is applied for determining a similarity between the object in the first image and the object in the second image.

In the context of the present invention, a mean shift iteration may be understood as an algorithm or a feature-space analysis technique for locating the maxima of a density function. Therein, the determined HOG-features of the first image may be treated as input object density and the determined HOG-features in the second image may be treated as targeted object density. The mean shift iteration is employed to find the target object in the second image that is most similar to a predetermined or given target model.

According to another embodiment of the invention, the mean shift iteration is started based on the determined position of the selected dominant filter within the first image. The means shift iteration may be considered as a tracking procedure which is based on a likelihood maximization as will be described hereinafter.

In particular, the determined positions of the selected dominant filters may be used as initial estimate center of the first image for tracking the object. In other words, anchor positions of the selected dominant filters may be taken as initial estimate center from the first frame such that the object tracking of the detected object can be performed starting from this anchor position. Therefore, the determined positions of the selected dominant filters, which define the anchor positions of these dominant filters, are used as starting points for the mean shift iteration and hence for the tracking of the object in the second and subsequent images.

It should be understood that the tracking can be invoked for as many objects available in the current frame, e.g. in the first image. A parallel, e.g. a simultaneous processing for different objects can be triggered as there are no interdependencies between the objects.

According to another embodiment of the invention, the mean shift iteration is stopped if a predetermined threshold value is reached, wherein the predetermined threshold value is representative for the similarity of the object in the first image and the same object in the second image.

The threshold value may be manually set by a user. The threshold value may be a parameter which directly influences the accuracy of the similarity detection during the mean shift iteration. In particular, the threshold value may determine the similarity degree between the objects in the first and second image that has to be achieved such that a sufficient similarity is identified and the mean shift iteration can be stopped. The estimation of the similarity is carried out in each iteration step until it converges to the target object which is also defined as the target candidate. A converging to the predetermined threshold value may thus stop the mean shift iteration. However, it is also possible that the mean shift iteration stops before converging, for example if a predetermined maximum number of iterations is reached. This aspect will be described in more detail in the following. The convergence of the threshold value can be made stringent to maintain the accuracy of the tracking process.

During the mean shift iteration, a mean shift vector is determined or constructed. As this mean shift vector is determined using the mean shift iteration, in which a similarity between the objects of the first and second images is determined, this procedure may also be considered as a likelihood maximization.

According to another embodiment of the invention, the mean shift iteration is stopped if a predetermined maximum number of iterations is reached.

This is the case if the similarity estimation has not converged until this predetermined maximum number of iterations is reached. The predetermined maximum number of iterations can be manually set by a user and may also be a parameter which directly influences the accuracy of the similarity detection during the mean shift iteration.

According to another embodiment of the invention, a target position of the selected dominant filter within the second image is tracked if the predetermined threshold value is reached or sufficiently approached before reaching the maximum number of iterations, i.e. in this case, a tracking of the object is enabled. Additionally, a tracking of the target position of the selected dominant filter within the second image is stopped if the predetermined maximum number of iterations is reached before reaching the threshold value.

In this manner, it can be decided whether the detected object in the second image should further be tracked or not. In particular, if the conversion took place before the maximum number of iterations is reached, the object is further tracked until no further image is provided. In other words, if the similarity estimation converges, the target center of the filter positions and the object tracking state are updated.

In contrast, if the conversion did not take place before the maximum number of iterations is reached, the object is not further tracked and the detection and tracking starts again based on a further image. This aspect will be described in more detail in the description of the figures. Furthermore, the states of each of the objects to be tracked can be stored during the tracking process.

According to another embodiment of the invention, the dominant filter is selected out of the group of filters using a score value for each filter of the group of filters, wherein the score value is obtained before detecting the type of the object within the first image.

In particular, selection criteria may be applied in order to determine which filter of the group of filters is specified as a dominant filter to be selected. For example, filters are selected from the group of filters as dominant filters when these filters have given more contribution for detection of the object. The dominant filters can thus be selected by tracing back the scores or score values obtained during the detection of the object which was carried out using deformable part models.

According to another embodiment of the invention, a feature descriptor is determined for the determined position of the selected dominant filter, wherein the feature descriptor is representative for a histogram of oriented gradients.

The feature descriptor may for instance be a HOG (histogram of oriented gradients) - feature. For determining such HOG-features, occurrences of a certain gradient orientation are counted in localized portions of an image, for example at the positions of the selected dominant filters. A histogram for these counts can then be provided. The HOG-features may thus be provided in regions or locations of the first image which are defined by the selected dominant filters.

According to another embodiment of the invention, the orientation of the selected dominant filter is determined at the determined position of the selected dominant filter within the image based on the determined feature descriptor.

The HOG-features from these locations may thus be used for an orientation assignment computation in order to specify the orientations of the selected dominant filters. Afterwards, the specified orientations of the selected dominant filters are utilized for image manipulation, e.g. image warping of the target object in the next image of the sequence of images.

According to another embodiment of the invention, the group of filters comprises root filters and/or part filters. According to another embodiment of the invention, the selected dominant filter comprises a root filter or a part filter. If a plurality of dominant filters is selected, the selected dominant filters may comprise root filters and/or part filters.

A root filter may be applied in the form of a nonlinear process that allows for improving high spatial frequency information in an image, for example for improving the detection of boundaries within the image. Root filters may be provided for covering an entire object within the image. In particular, a root filter location may define a detection window for the object. This detection window may thus cover the pixels contributing to the part of the object covered by the particular filter. Higher resolution part filters may be provided for covering smaller parts of said object.

In general, the inventive method can be imagined as a combined detection and tracking process for the object in the environment with an improved accuracy of the overall pedestrian detection, wherein the tracking is enabled in an intuitive way. Also, many objects can be tracked in this process in parallel even if they are partially occluded in the subsequent images, e.g. frames.

According to an aspect of the invention, a driver assistance system for tracking an object in an environment is provided. The driver assistance system comprises at least a camera and a processing unit. The camera is configured for providing a first image of an environment, wherein the first image comprises information about an object within the environment. The processing unit is configured for detecting a type of the object within the first image using a group of predetermined filters. The processing unit is configured for selecting a dominant filter out of the group of filters and for determining a position of the selected dominant filter within the first image. The processing unit is further configured for determining an orientation of the selected dominant filter at the determined position within the image. The camera is configured for providing a second image of the environment, wherein the second image comprises information about the object within the environment. The processing unit is configured for using the determined orientation of the selected dominant filter for manipulating the object in the second image.

### Brief description of the drawings

- Fig. 1: shows a flow diagram of a method for tracking an object in an environment according to an embodiment of the invention.
- Fig. 2: shows a vehicle comprising a driver assistance system according to an embodiment of the invention.

### Detailed description of the drawings

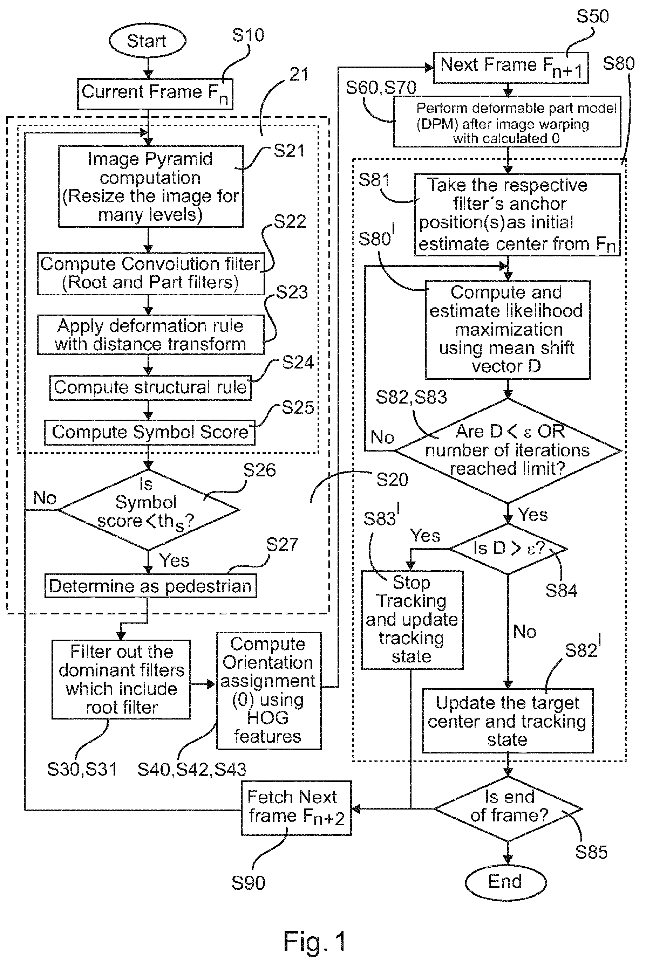

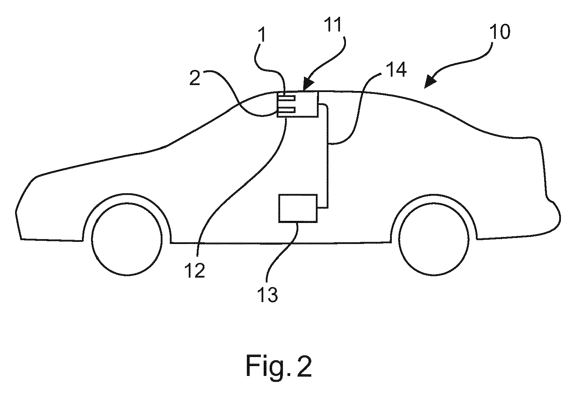

Fig. 1 shows a flow diagram of a method for tracking an object in an environment. In a step S10, a first image of an environment is provided, wherein the first image comprises information about an object within the environment. The first image may be defined as frame Fₙ. The image of the environment may be provided by a camera, for example a camera which is part of a driver assistance system as will be described with reference to Fig. 2.

In another step S20, a type of the object within the first image is detected using a deformable part model 21, e.g. a part-based model. The deformable part model 21 used for the detection of the object type may comprise the following sub-steps:

In a first sub-step S21, an image pyramid computation is carried out by resizing the images for many levels. Afterwards, in a sub-step S22, convolution filters are computed including a construction of root filters and part filters. Then, in a further sub-step S23, a deformation rule is applied by performing a distance transform. In another sub-step S24, a structural rule which may be created in a supervised training is computed. In a further sub-step S25, a symbol score may be computed in order to determine whether the specific type of object, e.g. whether the pedestrian, has been detected or not. A further sub-step S26 comprises a decision of whether the recognized object is a pedestrian or not. Therefore, a comparison between the computed symbol score and a first threshold value th_{S} is carried out in an iterative process. In particular, if the first threshold value th_{S} is greater than the symbol score, the object is detected as pedestrian in sub-step S27. If the first threshold value th_{S} is less than the symbol score, the iteration process starts again with computing the image pyramid in sub-step S21 for the same image, e.g. the first image.

After the object detection using the deformable part model 21 is completed, i.e. after the pedestrian has been identified and detected in sub-step S27, at least one dominant filter is selected or filtered out from the group of filters in step S30. Preferably, a plurality of dominant filters is selected out of the group of filters in step S30. The selected dominant filters may comprise root filters and/or part filters. In a step S31 of the method, the dominant filters are selected out of the group of filters using a score value of each filter of the group of filters, which score value was used for detecting the type of the object within the first image. In step S40, an orientation of the selected dominant filter is determined at the determined position of the selected dominant filter within the image. In another step S42, a feature descriptor for the determined position of the selected dominant filter is determined, wherein the feature descriptor is representative for a histogram of oriented gradients (HOG). Therefore, an orientation assignment O is computed using HOG-features which are based on the feature descriptors. In another step S43, the orientation of the selected dominant filter is determined at the determined position within the image based on the determined feature descriptor. Insofar steps S42 and S43 may be part steps or sub-steps of step S40.

In another step S50, a second image, e.g. a second frame Fₙ₊₁ of the environment is provided, wherein the second image comprises information about the object, e.g. the pedestrian, within the environment.

In step S60, the determined orientation of the selected dominant filter is used for manipulating the object in the second image, wherein the manipulation may be specified as an image warping of the obj ect, e.g. the target obj ect, in the second image using the calculated orientation assignment O.

In a further step S70, the type of the object is detected within the second image using the selected dominant filter in another object detection step based on deformable part models. This means that step S20 is repeated for the second image.

In another step S80, a mean shift iteration is applied for determining a similarity between the object in the first image and the object in the second image. The mean shift iteration is carried out starting in step S81 based on the determined position of the selected dominant filter within the first image, e.g. the first frame Fₙ. In particular, the positions of the selected dominant filters, e.g. their anchor positions, are used as initial estimate center from the first image Fₙ. In step S80', a likelihood maximization is computed and estimated using a mean shift vector D. The mean shift vector D is determined using the mean shift iteration, in which a similarity between the objects of the first and second images is determined. The mean shift iteration is stopped in step S82 if a second predetermined threshold value ε is reached or approached, wherein the second predetermined threshold value ε is representative for the similarity of the object in the first image and the object in the second image. In step S83, the mean shift iteration is alternatively stopped if a predetermined maximum number of iterations is reached. If the mean shift iteration has neither led to a sufficient convergence nor to a reaching of the maximum number of iterations, the estimation, e.g. the means shift iteration, is continued. In this case, the similarity estimation has not yet converged. In step S84, it is determined whether the mean shift vector D is greater or lesser than the second predetermined threshold value ε.

In step 82', a target position of the selected dominant filter within the second image is tracked if the second predetermined threshold value ε is greater than the mean shift vector D before reaching the maximum number of iterations. Furthermore, the current tracking state is also updated in step S82'. This results in a tracking of the detected object. In this case, it is checked in another step S85 whether a further image, e.g. a third image Fₙ₊₂ is provided or not. If no further image Fₙ₊₂ is provided, the tracking of the object stops. If a further image Fₙ₊₂ is provided in step S90, the tracking of the object continues again with the object detection of step S20. Therefore, new images may be provided by the camera.

Alternatively, in step S83', the tracking of the target position of the selected dominant filter within the second image and thereby the object tracking is stopped if the predetermined maximum number of iterations is reached before the threshold value ε is greater than the mean shift vector D. In this case, the tracking state is updated also in step S83' and a further image Fₙ₊₂ is provided in step S90 before the tracking of the object continues again with the object detection of step S20.

It should be understood that the above-described steps may be carried out chronologically according to their numbering in Fig. 1. However, it is possible that another chronological order of the different steps may be applied unless otherwise stated.

Fig. 2 shows a vehicle 10 with a driver assistance system 11. The driver assistance system 11 comprises a camera 12 as well as a processing unit 13. The camera 12 may be a stereo camera with a first camera 1 and a second camera 2. However, this is only an example and other types of cameras 12 are possible. The camera 12 and the processing unit 13 are connected by a cable-bound or wireless connection 14.

The camera 12 is configured for providing the first image of an environment, wherein the first image comprises information about an object within the environment. The processing unit 13 is configured for detecting a type of the object within the first image using a group of predetermined filters. The processing unit 13 is configured for selecting a dominant filter out of the group of filters and for determining the position of the selected dominant filter within the first image. The processing unit 13 is further configured for determining an orientation of the selected dominant filter at the determined position within the image. The camera 12 is configured for providing a second image of the environment, wherein the second image comprises information about the object within the environment. The processing unit 13 is configured for using the determined orientation of the selected dominant filter for manipulating the object in the second image.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims the term "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of protection.

## Claims

1. Method for tracking an object in an environment, comprising:
Providing a first image of an environment, the first image comprising information about an object within the environment (S10);
Detecting a type of the object within the first image using a group of predetermined filters (S20);
Selecting a dominant filter out of the group of filters and determining a position of the selected dominant filter within the first image (S30);
Determining an orientation of the selected dominant filter at the determined position of the selected dominant filter within the image (S40);
Providing a second image of the environment, the second image comprising information about the object within the environment (S50); and
Using the determined orientation of the selected dominant filter for manipulating the object in the second image (S60).

2. Method according to claim 1, comprising:
Detecting the type of the object within the second image using the selected dominant filter (S70).

3. Method according to any one of the preceding claims, comprising:
Applying a mean shift iteration for determining a similarity between the object in the first image and the object in the second image (S80).

4. Method according to claim 3, comprising:
Starting the mean shift iteration based on the determined position of the selected dominant filter within the first image (S81).

5. Method according to any one of claims 3 or 4, comprising:
Stopping the mean shift iteration if a predetermined threshold value is reached, wherein the predetermined threshold value is representative for the similarity of the object in the first image and the object in the second image (S82).

6. Method according to any one of claims 3 to 5, comprising:
Stopping the mean shift iteration if a predetermined maximum number of iterations is reached (83).

7. Method according to claims 5 and 6, comprising:
Tracking a target position of the selected dominant filter within the second image if the predetermined threshold value is reached before reaching the maximum number of iterations (S82'); and
Stop tracking the target position of the selected dominant filter within the second image if the predetermined maximum number of iterations is reached before reaching the threshold value (S83').

8. Method according to any one of the preceding claims, comprising:
Selecting the dominant filter out of the group of filters using a score value for each filter of the group of filters, the score value being obtained before detecting the type of the object within the first image (S31).

9. Method according to any one of the preceding claims, comprising:
Determining a feature descriptor for the determined position of the selected dominant filter, the feature descriptor being representative for a histogram of oriented gradients (S42).

10. Method according to claim 8, comprising:
Determining the orientation of the selected dominant filter at the determined position of the selected dominant filter within the image based on the determined feature descriptor (S43).

11. Method according to any one of the preceding claims,
wherein the group of filters comprises root filters and/or part filters; and
wherein the selected dominant filter comprises a root filter or a part filter.

12. Driver assistance system (1) for tracking an object in an environment, comprising:
a camera (11);
a processing unit (12);
wherein the camera is configured for providing a first image of an environment, the first image comprising information about an object within the environment;
wherein the processing (12) unit is configured for detecting a type of the object within the first image using a group of predetermined filters;
wherein the processing unit (12) is configured for selecting a dominant filter out of the group of filters and for determining a position of the selected dominant filter within the first image;
wherein the processing unit (12) is configured for determining an orientation of the selected dominant filter at the determined position within the image;
wherein the camera (11) is configured for providing a second image of the environment, the second image comprising information about the object within the environment; and
wherein the processing unit (12) is configured for using the determined orientation of the selected dominant filter for manipulating the object in the second image.
